# EUROPÄISCHE PATENTSCHRIFT

(11) **EP 2 524 157 B1**
(45) Veröffentlichungstag und Bekanntmachung des Hinweises auf die Patenterteilung: **15.04.2015**
(21) Anmeldenummer: 10800927.5
(22) Anmeldetag: 21.12.2010
(51) Int. Cl.: F16H 61/686, F16H 61/04, F16H 3/66

(54) **VERFAHREN ZUM BETREIBEN EINES FAHRZEUGANTRIEBSSTRANGES MIT EINER BRENNKRAFTMASCHINE**
METHOD FOR OPERATING A VEHICLE DRIVE TRAIN HAVING AN INTERNAL COMBUSTION ENGINE
PROCÉDÉ POUR FAIRE FONCTIONNER UNE CHAÎNE CINÉMATIQUE DE VÉHICULE À MOTEUR COMPRENANT UN MOTEUR À COMBUSTION INTERNE

(30) Priorität: 13.01.2010 DE 102010000860
(43) Veröffentlichungstag der Anmeldung: 21.11.2012
(73) Patentinhaber: ZF Friedrichshafen AG, 88038 Friedrichshafen (DE)
(72) Erfinder: HERBETH, Valentine, 88045 Friedrichshafen (DE); ARNOLD, Jörg, 88090 Immenstaad (DE); MIHATSCH, Georg, 88131 Lindau (DE); SCHMIDT, Andreas, 88213 Bavendorf (DE)
(86) Internationale Anmeldenummer: PCT/EP2010/070383
(87) Internationale Veröffentlichungsnummer: WO 2011/085924

(56) Entgegenhaltungen:
- EP-A2- 0 992 706
- WO-A1-2011/015466
- DE-A1- 10 244 023
- DE-A1-102007 011 507
- DE-A1-102007 022 776
- DE-A1-102008 000 429

## Beschreibung

Die Erfindung betrifft ein Verfahren zum Betreiben eines Fahrzeugantriebsstranges mit einer Brennkraftmaschine gemäß der im Oberbegriff des Patentanspruches 1 näher definierten Art.

Aus der Praxis bekannte Fahrzeugantriebsstränge sind üblicherweise jeweils mit einer Brennkraftmaschine und wenigstens einer zwischen der Brennkraftmaschine und einem Abtrieb angeordneten Getriebeeinrichtung ausgebildet, mittels der jeweils betriebszustandsabhängig angeforderte Übersetzungen zur Verfügung stellbar sind.

Derartige an sich bekannte und als Automatgetriebe ausgeführte Getriebeeinrichtungen sind zum Darstellen der verschiedenen Übersetzungen mit Schaltelementen ausgebildet, über welche jeweils ein anliegendes Drehmoment reibschlüssig übertragbar ist. Bei Vorliegen einer Anforderung zum Darstellen einer definierten Übersetzung werden jeweils wenigstens eines oder mehrere der reibschlüssigen Schaltelemente aus dem Kraftfluss einer Getriebevorrichtung abgeschaltet, während wenigstens ein weiteres oder weitere reibschlüssige Schaltelemente zur Darstellung der angeforderten Übersetzung in den Kraftfluss der Getriebeeinrichtung zugeschaltet werden. Während des Zuschaltvorganges eines reibschlüssigen Schaltelementes sind zur Gewährleistung eines gewünschten Schaltkomforts keine besonderen Synchronisiermaßnahmen erforderlich, da ein angestrebter Schaltkomfort mittels reibschlüssiger Schaltelemente bei definierten Anpressdrücken innerhalb eines breiten Differenzdrehzahlbandes erreichbar ist.

Da solche Getriebeeinrichtungen in an sich bekannter Art und Weise auf Grund von im Bereich von geöffneten reibschlüssigen Schaltelementen auftretenden Schleppverlusten mit nur unzureichenden Wirkungsgraden betreibbar sind, werden bestimmte reibschlüssige Schaltelemente durch formschlüssige Schaltelemente ersetzt. Bei Automatgetrieben, die sowohl mit reibschlüssigen Schaltelementen als auch mit mindestens einem formschlüssigen Schaltelement und mit einer entsprechenden Radsatzkonstruktion ausgeführt sind, ist zur Umsetzung einer definierten Schaltanforderung mindestens ein formschlüssiges Schaltelement in einen Kraftfluss einer Getriebevorrichtung zuzuschalten.

Nachteilhafterweise sind formschlüssige Schaltelemente mit oder ohne zusätzliche konstruktive Synchronisiereinrichtungen im Vergleich zu reibschlüssigen Schaltelementen nur bei sehr geringen Differenzdrehzahlen, d. h. nahe ihrer Synchrondrehzahl, komfortabel schaltbar, wodurch ein Betrieb einer mit wenigstens einem formschlüssigen Schaltelement ausgeführten und als Automatgetriebe ausgebildeten Getriebeeinrichtung zumindest während der Durchführung bestimmter Schaltungen, an welchen ein formschlüssiges Schaltelement beteiligt ist, in unerwünschtem Umfang beeinträchtigt ist. Eine angeforderte Schaltung ist unter Umständen erst nach Ablauf einer unerwünscht langen Schaltzeit abschließbar, da vor dem Schließen des an der angeforderten Schaltung beteiligten formschlüssigen Schaltelementes sich die Differenzdrehzahl im Bereich des formschlüssigen Schaltelementes auf einen Betrag einstellen muss, zu dem das formschlüssige Schaltelement in seinen geschlossenen Betriebszustand überführbar ist.

Zusätzliche konstruktive Maßnahmen zum Synchronisieren von formschlüssigen Schaltelementen von Getriebeeinrichtungen, um eine angeforderte Schaltung innerhalb einer akzeptablen Schaltzeit bei gleichzeitig hohem Schaltkomfort durchführen zu können, erhöhen jedoch unerwünschterweise sowohl die Fertigungskosten als auch den Bauraumbedarf der Getriebeeinrichtungen.

Aus der EP 00992706 A2, die alle Merkmale des Oberbegriffes von Anspruch 1 offenbart, ist ein Fahrzeuggetriebe bekannt, welches sowohl reibschlüssige als formschlüssige Schaltelemente aufweist. Eine Differenzdrehzahl zwischen den Schaltelementhälften des formschlüssigen Schaltelements wird hierbei mittels der Veränderung der Motordrehzahl so verringert, dass das formschlüssige Schaltelement eingerückt werden kann. Nachteiligerweise darf bei diesem Zahnräderwechselgetriebe im Neutralzustand kein Schaltelement geschlossen sein, so dass beim Wechsel vom Neutralzustand in eine Übersetzungsstufe zunächst ein formschlüssiges Schaltelement mit vorausgehender Anpassung der Motordrehzahl zeitaufwendig eingelegt werden muss.

Der vorliegenden Erfindung liegt daher die Aufgabe zu Grunde, ein Verfahren zum Betreiben eines Fahrzeugantriebsstranges zur Verfügung zu stellen, mittels welchem Schaltungen in Getriebeeinichtungen, an welchen wenigstens ein formschlüssiges Schaltelement beteiligt ist, mit hohem Schaltkomfort kostengünstig und ohne zusätzlichen Bauraumbedarf einer Getriebeeinrichtung innerhalb vordefinierter Schaltzeiten durchführbar sind.

Erfindungsgemäß wird diese Aufgabe mit einem Verfahren mit den Merkmalen des Patentanspruches 1 gelost.

Bei dem erfindungsgemäßen Verfahren zum Betreiben eines Fahrzeugantriebsstranges mit einer Brennkraftmaschine und mit einer im Bereich einer Getriebeeingangswelle mit der Brennkraftmaschine wirkverbundenen Getriebeeinrichtung, die mit einem formschlüssigen Schaltelement ausgebildet ist, dessen eine Schaltelementhälfte mit der Getriebeeingangswelle und dessen andere Schaltelementhälfte mit einer Getriebeausgangswelle in Wirkverbindung steht, wird bei Vorliegen einer Anforderung zum Führen der Getriebeeinrichtung ausgehend von einem Neutralbetriebszustand, in welchem ein Kraftfluss im Bereich der Getriebeeinrichtung unterbrochen ist, in einen Betriebszustand, in dem der Kraftfluss im Bereich der Getriebeeinrichtung hergestellt ist, das formschlüssige Schaltelement in einen geschlossenen Betriebszustand überführt. Hierbei wird eine Differenzdrehzahl zwischen den Schaltelementhälften des formschlüssigen Schaltelementes mittels Variieren der Drehzahl der Brennkraftmaschine in ein Differenzdrehzahlfester geführt, innerhalb welchem das formschlüssige Schaltelement in einen geschlossenen Betriebszustand führbar ist. Damit ist ein zuzuschaltendes formschlüssiges Schaltelement einer Getriebeeinrichtung ohne zusätzliche konstruktive Synchronisierungseinrichtungen durch einen entsprechenden Betrieb der Brennkraftmaschine kostengünstig und mit geringem Bauraumbedarf der Getriebeeinrichtung während einer angeforderten Schaltung vor dem Schließvorgang synchronisiert, so dass Schaltungen mit hohem Schaltkomfort bei gleichzeitig akzeptablen Schaltzeiten durchführbar sind.

Erfindungsgemäß wird ein weiteres formschlüssiges Schaltelement im Neutralbetriebszustand der Getriebeeinrichtung in einem geschlossen Zustand gehalten.

Dadurch, dass das weitere formschlüssige Schaltelement im Neutralbetriebszustand der Getriebeeinrichtung auch ohne entsprechende Schaltanforderung bereits in seinen geschlossenen Betriebszustand überführt und gehalten wird, ist die Getriebeeinrichtung mit einer hohen Spontaneität betreibbar.

Bei einer vorteilhaften Variante des erfindungsgemäßen Verfahrens wird ein zur Herstellung des Kraftflusses im Bereich der Getriebeeinrichtung zuzuschaltendes reibschlüssiges Schaltelement vor Beginn des Motoreingriffes im Bereich der Brennkraftmaschine in einen geschlossenen Betriebszustand überführt. Dies ist erforderlich um die Differenzdrehzahlen an dem formschlüssigen Schaltelement berechnen zu können.

Die Drehzahl der Brennkraftmaschine wird während einer weiteren Variante des erfindungsgemäßen Verfahrens bei einer außerhalb des Differenzdrehzahlfensters liegenden positiven Differenzdrehzahl zwischen der Drehzahl der getriebeeingangsseitigen Schaltelementhälfte und der Drehzahl der getriebeausgangsseitigen Schaltelementhälfte des formschlüssigen Schaltelementes reduziert, bis die Differenzdrehzahl innerhalb des Differenzdrehzahlfensters liegt.

Darüber hinaus wird die Drehzahl der Brennkraftmaschine bei einer weiteren Variante des erfindungsgemäßen Verfahrens bei einer außerhalb des Differenzdrehzahlfensters liegenden negativen Differenzdrehzahl zwischen der Drehzahl der getriebeeingangsseitigen Schaltelementhälfte und der Drehzahl der getriebeausgangsseitigen Schaltelementhälfte des formschlüssigen Schaltelementes angehoben, bis die Differenzdrehzahl innerhalb des Differenzdrehzahlfensters liegt.

Weitere Vorteile und vorteilhafte Ausführungsformen des erfindungsgemäßen Gegenstandes ergeben sich aus den Patentansprüchen und dem nachfolgend anhand der Zeichnung beschriebenen Ausführungsbeispiel.

Sowohl die in den Unteransprüchen angegebenen Merkmale als auch die in dem nachfolgenden Ausführungsbeispiel des erfindungsgemäßen Gegenstandes angegebenen Merkmale sind jeweils für sich alleine oder in beliebiger Kombination miteinander geeignet, den erfindungsgemäßen Gegenstand weiterzubilden. Die jeweiligen Merkmalskombinationen stellen hinsichtlich der

Weiterbildung des Gegenstandes nach der Erfindung keine Einschränkung dar, sondern weisen im Wesentlichen lediglich beispielhaften Charakter auf.

Es zeigt:
- Fig. 1: eine stark schematisierte Darstellung eines Fahrzeugantriebsstranges;
- Fig. 2: ein Räderschema einer Getriebeeinrichtung des Fahrzeugantriebsstranges gemäß Fig. 1;
- Fig. 3: ein Schaltschema der Getriebeeinrichtung gemäß Fig. 2 in tabellarischer Form; und
- Fig. 4: mehrere Verläufe verschiedener Betriebszustandsparameter des Fahrzeugantriebsstranges gemäß Fig. 1 während der Durchführung einer angeforderten Schaltung.

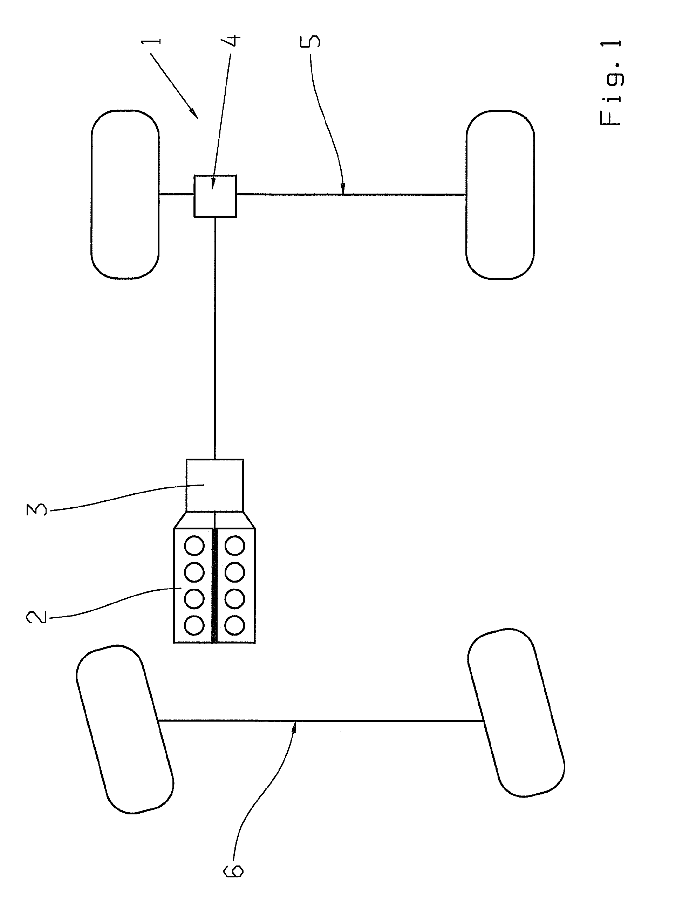

In Fig. 1 ist ein Fahrzeugantriebsstrang 1 mit einer Brennkraftmaschine 2, mit einer Getriebeeinrichtung 3, mittels welchem verschiedene Übersetzungen für Vorwärts- und Rückwärtsfahrt darstellbar sind, mit einer Differentialgetriebeeinheit 4 und mit zwei Fahrzeugachsen 5, 6 dargestellt, wobei die Fahrzeugachse 5 vorliegend die Fahrzeughinterachse und die Fahrzeugachse 6 die Fahrzeugvorderachse ist.

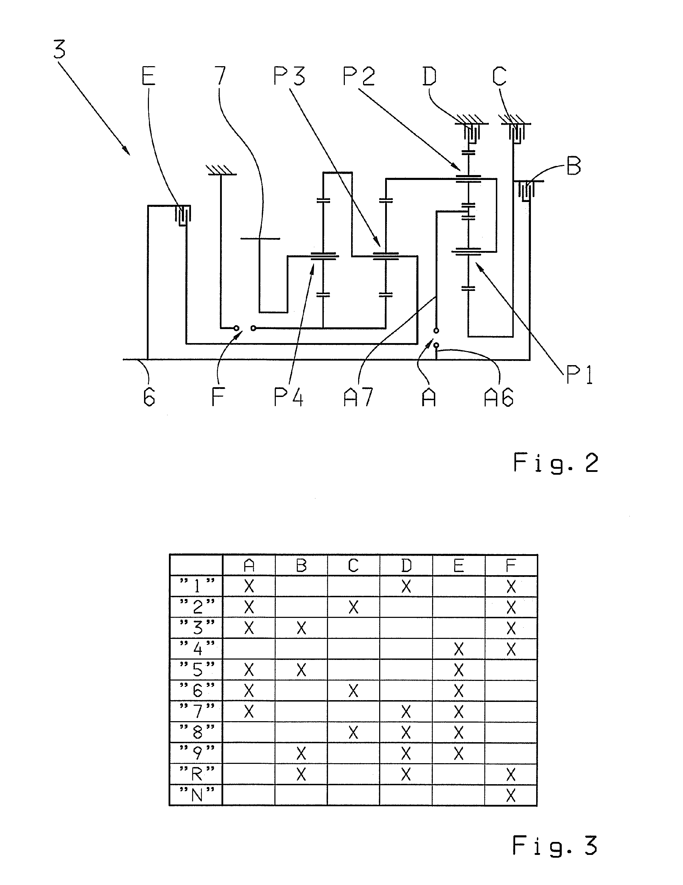

Ein Räderschema der Getriebeeinrichtung 3 bzw. eines Mehrstufengetriebes, welches grundsätzlich aus der unveröffentlichten deutschen Patentanmeldung DE 10 2008 000 429.4 der Anmelderin bekannt ist, ist in Fig. 2 dargestellt. Die Getriebeeinrichtung 3 umfasst eine Getriebeeingangswelle 6 und eine Getriebeausgangswelle 7, welche in in einem Fahrzeug montiertem Zustand mit der Differentialgetriebeeinheit 4 verbunden ist, während die Getriebeeingangswelle 6 mit der Brennkraftmaschine 2 wirkverbunden ist.

Darüber hinaus umfasst die Getriebeeinrichtung 3 vier Planetenradsätze P1 bis P4, wobei der erste und der zweite Planetenradsatz P1, P2, die vorzugsweise als Minus-Planetensätze ausgebildet sind, einen schaltbaren Vorschaltradsatz bilden, während der dritte und der vierte Planetenradsatz P3, P4 den Hauptradsatz darstellen. Zusätzlich umfasst die Getriebeeinrichtung 3 sechs Schaltelemente A bis F, wovon die Schaltelemente C, D und F als Bremsen und die Schaltelemente A, B und E als Schaltkupplungen ausgeführt sind.

Mit den Schaltelementen A bis F ist ein selektives Schalten von neun Vorwärtsgängen "1" bis "9" und einem Rückwärtsgang "R" realisierbar, wobei bis auf die vierte Übersetzungsstufe "4" zur Darstellung einer Übersetzung in der Getriebeeinrichtung 3 bzw. zum Herstellen eines Kraftflusses in der Getriebeeinrichtung 3 jeweils gleichzeitig drei Schaltelemente in einen geschlossenen Betriebszustand zu führen bzw. zu halten sind.

Die Schaltelemente A und F sind vorliegend als formschlüssige Schaltelemente ausgebildet, um im Betrieb der Getriebeeinrichtung 3 im Vergleich zu Getriebeeinrichtungen, die nur mit reibschlüssigen Schaltelementen ausgebildet sind, durch geöffnete reibschlüssige Schaltelemente verursachte Schleppmomente zu reduzieren. Da formschlüssige Schaltelemente im Allgemeinen nur innerhalb eines sehr schmalen Differenzdrehzahlbandes um die Synchrondrehzahl herum aus einem geöffneten Betriebszustand in einen geschlossenen Betriebszustand überführbar sind, wird die Synchronisierung eines zuzuschaltenden formschlüssigen Schaltelementes ohne zusätzliche konstruktive Ausführungen mittels des nachfolgenden näher beschriebenen erfindungsgemäßen Verfahrens unterstützt bzw. durch die erfindungsgemäße Vorgehensweise vollständig realisiert.

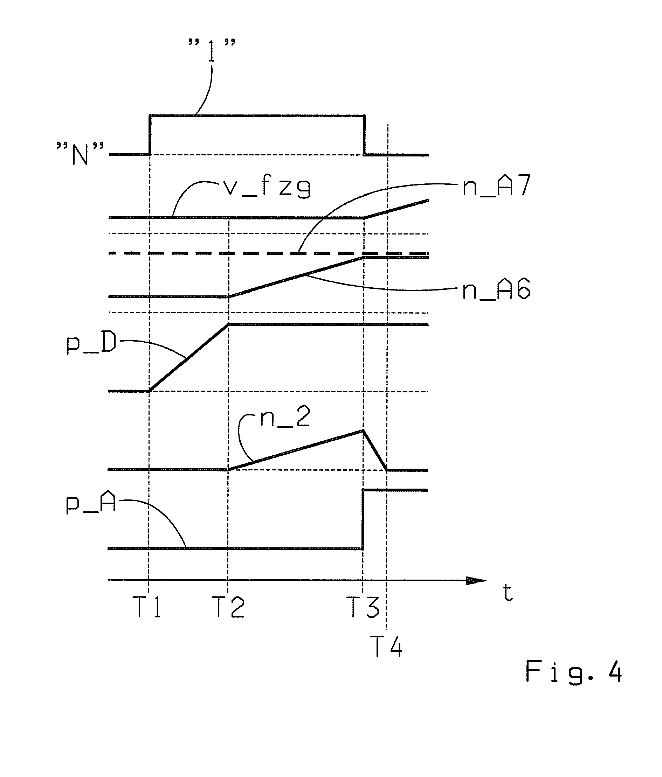

Die Wirkungsweise einer Variante des erfindungsgemäßen Verfahrens wird anhand der in Fig. 4 über der Zeit t näher dargestellten Betriebszustandsverläufe mehrerer Betriebsparameter des Fahrzeugantriebsstranges 1 gemäß Fig. 1 näher erläutert.

Bis zu einem Zeitpunkt T1 befindet sich die Getriebeeinrichtung 3 in einem sogenannten Neutralbetriebszustand "N", zu dem über die Getriebeeinrichtung 3 im Wesentlichen kein Antriebsmoment von der Getriebeeingangswelle 6 in Richtung der Getriebeausgangswelle 7 oder in umgekehrter Richtung führbar ist und zu dem nur das formschlüssige Schaltelement F in geschlossenem Betriebszustand vorliegt, während die anderen Schaltelemente A bis E alle in geöffnetem Betriebszustand vorliegen. Zum Zeitpunkt T1 ergeht eine Schaltanforderung zum Einlegen der ersten Übersetzungsstufe "1" für Vorwärtsfahrt in der Getriebeeinrichtung 3, zu deren Darstellung neben dem Schaltelement F das reibschlüssige Schaltelement D und das formschlüssige Schaltelement A in einen geschlossenen Betriebszustand zu überführen sind.

Dadurch, dass das formschlüssige Schaltelement F im Neutralbetriebszustand "N" der Getriebeeinrichtung 3 auch ohne entsprechende Schaltanforderung bereits in seinen geschlossenen Betriebszustand überführt und gehalten wird, ist die Getriebeeinrichtung 3 mit einer hohen Spontaneität betreibbar. Das Schaltelement F ist auch zur Darstellung der Übersetzung "R" für Rückwärtsfahrt beteiligt, womit bei Vorliegen einer entsprechenden Schaltanforderung ausgehend von dem Neutralbetriebszustand "N" eine Schaltung in die Anfahrübersetzung bzw. die erste Übersetzung für Vorwärtsfahrt "1" oder in die Übersetzung "R" für Rückwärtsfahrt jeweils mit kurzer Schaltzeit durchführbar ist. Dies resultiert aus der Tatsache, dass dann jeweils nur die Schaltelemente A und D oder die Schaltelemente B und D zu schließen sind.

Zur Umsetzung der Schaltanforderung vom Neutralbetriebszustand "N" in die erste Übersetzungsstufe "1" für Vorwärtsfahrt wird zunächst das reibschlüssige Schaltelement D durch rampenförmiges Anheben eines Betätigungsdruckes p_D des Schaltelementes D geschlossen, welches bei gleichzeitig geschlossenem Schaltelement F und wiederum gleichzeitig in geöffnetem Betriebszustand vorliegendem weiteren formschlüssigen Schaltelement A in geschlossenem Betriebszustand noch nicht den Kraftschluss in der Getriebeeinrichtung 3 herstellt. Daran anschließend ist das formschlüssige Schaltelement A zuzuschalten bzw. in seinen geschlossenen Betriebszustand zu überführen. Der Schaltvorgang, ausgehend von dem Neutralbetriebszustand "N" in Richtung der ersten Übersetzungsstufe "1 ", ist dann beendet.

Ab einem Zeitpunkt T2, zu welchem das reibschlüssige Schaltelement D in geschlossenem Betriebszustand vorliegt, wird über eine Überwachung ermittelt, dass eine Differenzdrehzahl zwischen einer mit der Getriebeeingangswelle 6 wirkverbundenen Schaltelementhälfte A6 des formschlüssigen Schaltelementes A und einer mit der Getriebeausgangswelle 7 gekoppelten Schaltelementhälfte A7 des formschlüssigen Schaltelementes A vorliegt, die außerhalb eines Differenzdrehzahlfensters liegt, innerhalb welchem das formschlüssige Schaltelement innerhalb einer vordefinierten Schaltzeit bei gleichzeitig angefordertem Schaltkomfort in einen geschlossenen Betriebszustand überführbar ist. Aus diesem Grund wird zum Zeitpunkt T2 vorliegend ein positiver Motoreingriff durchgeführt und eine Drehzahl n_2 der Brennkraftmaschine 2 rampenförmig bis zu einem Zeitpunkt T3 angehoben. Dadurch reduziert sich die Differenz zwischen der Drehzahl n_A6 der getriebeeingangsseitigen Schaltelementhälfte A6 des formschlüssigen Schaltelementes A, die der Drehzahl n_2 der Brennkraftmaschine 2 sowie der Drehzahl der Getriebeeingangswelle 6 entspricht, und der Drehzahl n_A7 der getriebeausgangsseitigen Schaltelementhälfte A7.

Zum Zeitpunkt T3 liegt die Differenzdrehzahl zwischen den Schaltelementhälften A6 und A7 des formschlüssigen Schaltelementes A innerhalb des vordefinierten Differenzdrehzahlfensters, innerhalb dem das formschlüssige Schaltelement A in einen geschlossenen Betriebszustand mit dem gewünschten Schaltkomfort überführbar ist. Aus diesem Grund wird ein Betätigungsdruck p_A bzw. eine Betätigungskraft des formschlüssigen Schaltelementes A zum Zeitpunkt T3 sprungartig angehoben und das formschlüssige Schaltelement A in seinen geschlossenen Betriebszustand überführt. Anschließend wird der positive Motoreingriff wieder zurückgenommen, womit sich die Drehzahl n_2 der Brennkraftmaschine 2 bis zu einem Zeitpunkt T4 wenigstens annähernd auf das Drehzahlniveau zum Zeitpunkt T2 absenkt.

Ab dem Zeitpunkt T3, ab welchem in der Getriebeeinrichtung 3 der Kraftschluss durch Einlegen der ersten Übersetzungsstufe "1 für Vorwärtsfahrt hergestellt ist, steigt eine Fahrzeuggeschwindigkeit v_fzg, die zwischen den Zeitpunkten T1 und T3 wenigstens annähernd konstant und größer Null ist, kontinuierlich mit flachem Gradienten an.

In Abhängigkeit des jeweils vorliegenden Anwendungsfalles wird die Brennkraftmaschine 2 während des positiven Motoreingriffs drehzahl- oder momentengeregelt betrieben, um im Bereich des formschlüssigen Schaltelementes A einen sogenannten Nulldurchgang der Differenzdrehzahl zwischen den beiden Schaltelementhälften A6 und A7 zu erreichen und das formschlüssige Schaltelement A im Wesentlichen in synchronisiertem Betriebszustand in seinen geschlossenen Zustand überführen zu können.

Die Getriebeeingangsdrehzahl wird vorliegend durch Ändern der Drehzahl n_2 der Brennkraftmaschine 2 variiert, wobei die Drehzahl der Getriebeeingangswelle 6 bei direkter Kopplung der Getriebeeingangswelle 6 mit einer Motorausgangswelle der Brennkraftmaschine 2 im Wesentlichen der Drehzahl n_2 der Brennkraftmaschine 2 entspricht. Bei Zwischenschaltung weiterer Elemente, wie eines betriebszustandsabhängig schlupfend betriebenen reibschlüssigen Schaltelementes oder eines hydrodynamischen Drehmomentwandlers, stellt die Getriebeeingangsdrehzahl jeweils eine zur Drehzahl n_2 der Brennkraftmaschine 2 äquivalente Drehzahl dar.

### Bezugszeichen

- 1: Fahrzeugantriebsstrang
- 2: Brennkraftmaschine
- 3: Getriebeeinrichtung
- 4: Differentialgetriebeeinheit
- 5: Fahrzeugachse
- 6: Getriebeeingangswelle
- 7: Getriebeausgangswelle
- "1" bis "9": Übersetzung für Vorwärtsfahrt
- "N": Neutralbetriebszustand der Getriebeeinrichtung
- "R": Übersetzung für Rückwärtsfahrt
- A bis F: Schaltelement
- A6: getriebeeingangsseitige Schaltelementhälfte des formschlüssigen Schaltelementes A
- A7: getriebeausgangsseitige Schaltelementhälfte des formschlüssigen Schaltelementes A
- n_2: Drehzahl der Brennkraftmaschine
- n_A6: Drehzahl der getriebeeingangsseitigen Schaltelementhälfte
- n_A7: Drehzahl der getriebeausgangsseitigen Schaltelementhälfte
- p_A: Betätigungsdruck
- p_D: Betätigungsdruck
- P1 bis P4: Planetenradsatz
- t: Zeit
- T1 bis T4: diskreter Zeitpunkt
- v_fzg: Fahrzeuggeschwindigkeit

## Patentansprüche

1. Verfahren zum Betreiben eines Fahrzeugantriebsstranges (1) mit einer Brennkraftmaschine (2) und mit einer im Bereich einer Getriebeeingangswelle (6) mit der Brennkraftmaschine (2) wirkverbundenen Getriebeeinrichtung (3) mit einem formschlüssigen Schaltelement (A), dessen eine Schaltelementhälfte (A6) mit der Getriebeeingangswelle (6) und dessen andere Schaltelementhälfte (A7) mit einer Getriebeausgangswelle (7) in Wirkverbindung steht, wobei bei Vorliegen einer Anforderung zum Führen der Getriebeeinrichtung (3) ausgehend von einem Neutralbetriebszustand ("N"), in welchem ein Kraftfluss im Bereich der Getriebeeinrichtung (3) unterbrochen ist, in einen Betriebszustand, in dem der Kraftfluss im Bereich der Getriebeeinrichtung (3) hergestellt ist, das formschlüssige Schaltelement (A) in einem geschlossenen Betriebszustand überführt wird, wobei eine Differenzdrehzahl zwischen den Schaltelementhälften (A6, A7) des formschlüssigen Schaltelementes (A) mittels Variieren einer Drehzahl (n_2) der Brennkraftmaschine (2) in ein Differenzdrehzahlfenster geführt wird, innerhalb welchem das formschlüssige Schaltelement (A) in den geschlossenen Betriebszustand führbar ist, **dadurch gekennzeichnet, dass** ein weiteres formschlüssiges Schaltelement (F) im Neutralbetriebszustand ("N") der Getriebeeinrichtung (3) in einem geschlossen Zustand gehalten wird.

2. Verfahren nach Anspruch 1, **dadurch gekennzeichnet, dass** ein zur Herstellung des Kraftflusses im Bereich der Getriebeeinrichtung (3) zuzuschaltendes reibschlüssiges Schaltelement (D) vor Beginn des Motoreingriffes im Bereich der Brennkraftmaschine (2) in einen geschlossenen Betriebszustand überführt wird.

3. Verfahren nach Anspruch 1 oder 2, **dadurch gekennzeichnet, dass** die Drehzahl (n_2) der Brennkraftmaschine (2) bei einer außerhalb des Differenzdrehzahlfensters liegenden positiven Differenzdrehzahl zwischen der Drehzahl (n_A6) der getriebeeingangsseitigen Schaltelementhälfte (A6) und der Drehzahl (n_A7) der getriebeausgangsseitigen Schaltelementhälfte (A7) des formschlüssigen Schaltelementtes (A) reduziert wird, bis die Differenzdrehzahl innerhalb des Differenzdrehzahlfensters liegt.

4. Verfahren nach einem der Ansprüche 1 bis 3, **dadurch gekennzeichnet, dass** die Drehzahl (n_2) der Brennkraftmaschine (2) bei einer außerhalb des Differenzdrehzahlfensters liegenden negativen Differenzdrehzahl zwischen der Drehzahl (n_A6) der getriebeeingangsseitigen Schaltelementhälfte (A6) und der Drehzahl (n_A7) der getriebeausgangsseitigen Schaltelementhälfte (A7) des formschlüssigen Schaltelementes (A) angehoben wird, bis die Differenzdrehzahl innerhalb des Differenzdrehzahlfensters liegt.

## Claims

1. Method for operating a vehicle drivetrain (1) having an internal combustion engine (2) and having a transmission device (3) which is operatively connected, in the region of a transmission input shaft (6), to the internal combustion engine (2) and which has a positively locking shift element (A), one shift element half (A6) of which is operatively connected to the transmission input shaft (6) and the other shift element half (A7) of which is operatively connected to a transmission output shaft (7), wherein, in the presence of a demand for transferring the transmission device (3) from a neutral operating state ("N"), in which a power flow is interrupted in the region of the transmission device (3), into an operating state in which the power flow is established in the region of the transmission device (3), the positively locking shift element (A) is transferred into a closed operating state, wherein, by variation of a rotational speed (n_2) of the internal combustion engine (2), a rotational speed difference between the shift element halves (A6, A7) of the positively locking shift element (A) is adjusted into a rotational speed difference window within which the positively locking shift element (A) can be transferred into the closed operating state, **characterized in that**, in the neutral operating state ("N") of the transmission device (3), a further positively locking shift element (F) is held in a closed state.

2. Method according to Claim 1, **characterized in that** a frictionally locking shift element (D) which can be engaged in order to establish the power flow in the region of the transmission device (3) is transferred into a closed operating state before the start of the engine intervention in the region of the internal combustion engine (2).

3. Method according to Claim 1 or 2, **characterized in that**, in the presence of a positive rotational speed difference, which lies outside the rotational speed difference window, between the rotational speed (n_A6) of the transmission input-side shift element half (A6) and the rotational speed (n_A7) of the transmission output-side shift element half (A7) of the positively locking shift element (A), the rotational speed (n_2) of the internal combustion engine (2) is reduced until the rotational speed difference lies within the rotational speed difference window.

4. Method according to one of Claims 1 to 3, **characterized in that**, in the event of a negative rotational speed difference, which lies outside the rotational speed difference window, between the rotational speed (n_A6) of the transmission input-side shift element half (A6) and the rotational speed (n_A7) of the transmission output-side shift element half (A7) of the positively locking shift element (A), the rotational speed (n_2) of the internal combustion engine (2) is increased until the rotational speed difference lies within the rotational speed difference window.

## Revendications

1. Procédé pour faire fonctionner une chaîne cinématique d'un véhicule (1) comprenant un moteur à combustion interne (2) et un dispositif de transmission (3) en liaison fonctionnelle dans la région d'un arbre d'entrée de transmission (6) avec le moteur à combustion interne (2), avec un élément de changement de vitesse à engagement positif (A), dont une moitié d'élément de changement de vitesse (A6) est en liaison fonctionnelle avec l'arbre d'entrée de transmission (6) et dont l'autre moitié d'élément de changement de vitesse (A7) est en liaison fonctionnelle avec un arbre de sortie de transmission (7), dans lequel, en présence d'une demande de transfert du dispositif de transmission (3) d'un état de fonctionnement neutre ("N"), dans lequel un flux de force dans la région du dispositif de transmission (3) est interrompu, dans un état de fonctionnement dans lequel le flux de force dans la région du dispositif de transmission (3) est établi, l'élément de changement de vitesse à engagement positif (A) est transféré dans un état de fonctionnement fermé, une différence de vitesse de rotation entre les moitiés d'élément de changement de vitesse (A6, A7) de l'élément de changement de vitesse à engagement positif (A) étant transférée par variation d'une vitesse de rotation (n_2) du moteur à combustion interne (2) dans une fenêtre de différence de vitesse de rotation, à l'intérieur de laquelle l'élément de changement de vitesse à engagement positif (A) peut être transféré dans l'état de fonctionnement fermé, **caractérisé en ce qu'**un élément de changement de vitesse à engagement positif supplémentaire (F) est maintenu dans un état fermé dans l'état de fonctionnement neutre ("N") du dispositif de transmission (3).

2. Procédé selon la revendication 1, **caractérisé en ce qu'**un élément de changement de vitesse (D) à engagement par friction devant être commuté pour établir le flux de force dans la région du dispositif de transmission (3) est transféré dans un état de fonctionnement fermé avant le début d'une intervention du moteur dans la région du moteur à combustion interne (2).

3. Procédé selon la revendication 1 ou 2, **caractérisé en ce que** la vitesse de rotation (n_2) du moteur à combustion interne (2), dans le cas d'une différence de vitesse de rotation positive située à l'extérieur de la fenêtre de différence de vitesse de rotation entre la vitesse de rotation (n_A6) de la moitié d'élément de changement de vitesse du côté de l'entrée de la transmission (A6) et la vitesse de rotation (n_A7) de la moitié d'élément de changement vitesse du côté de la sortie de la transmission (A7) de l'élément de changement vitesse à engagement positif (A), est réduite jusqu'à ce que la différence de vitesse de rotation se situe à l'intérieur de la fenêtre de différence de vitesse de rotation.

4. Procédé selon l'une quelconque des revendications 1 à 3, **caractérisé en ce que** la vitesse de rotation (n_2) du moteur à combustion interne (2), dans le cas d'une différence de vitesse de rotation négative située à l'extérieur de la fenêtre de différence de vitesse de rotation entre la vitesse de rotation (n_A6) de la moitié d'élément de changement de vitesse du côté de l'entrée de la transmission (A6) et la vitesse de rotation (n_A7) de la moitié d'élément de changement vitesse du côté de la sortie de la transmission (A7) de l'élément de changement de vitesse à engagement positif (A), est augmentée jusqu'à ce que la différence de vitesse de rotation soit située à l'intérieur de la fenêtre de différence de vitesse de rotation.
